# EUROPÄISCHE PATENTANMELDUNG

(11) **EP 0 776 137 A2**
(43) Veröffentlichungstag der Anmeldung: **28.05.1997**
(21) Anmeldenummer: 96117853.0
(22) Anmeldetag: 07.11.1996
(51) Int. Cl.: H04Q 3/62, H04M 3/40, H04M 3/42

(54) **Kommunikationssystem mit Fernssprechendgeräten mit automatischem Dämpfungsausgleich**

(30) Priorität: 24.11.1995 DE 29518704 U
(71) Anmelder: SIEMENS AKTIENGESELLSCHAFT, 80333 München (DE)
(72) Erfinder: Bebko, Thomas, D-59174 Kamen (DE)

(57) **Zusammenfassung**

Fernsprechendgeräte mit automatischem Dämpfungsausgleich (Hauptanschluß) regeln die Verstärkungseinstellung proportional zum jeweiligen Wert des Leitungsgleichstroms. Werden diese Fernsprechendgeräte an ein Nebenstellen-Kommunikationssystem mit elektronischer Koppeleinrichtung angeschlossen, ist die Teilnehmerseite galvanisch von der externen Seite (Amtsseite) getrennt. Damit ist eine Regelung nicht möglich. Die Gesprächslautstärke wäre unangenehm hoch. Um nun einen normalen Betrieb an dem Kommunikationssystem zu ermöglichen, wird die Struktur der Koppeleinrichtung um zusätzliche Innenverbindungs- und externe Durchschaltewege erweitert, für die eine von der jeweiligen Art der Verbindung abhängige zusätzliche Bedämpfung vorgesehen ist. Es ist durch den Betreiber des Kommunikationssystems bzw. durch den Teilnehmer frei wählbar, ob für den betreffenden Anschluß die Dämpfung wirksam werden soll.

## Beschreibung

In modern konzipierten programmgesteuerten privaten Kommunikationssystemen wird angestrebt, daß nicht nur systemorientierte Fernsprechendgeräte anzuschließen sind, sondern auch Fernsprechendgeräte eingesetzt werden können, die normalerweise für den öffentlichen sogenannten Hauptanschluß vorgesehen sind. Dies betrifft also auch Fernsprechendgeräte, die einen automatischen Dämpfungsausgleich ermöglichen. Das bedeutet, daß diese Fernsprechendgeräte die Verstärkungseinstellung proportional zum Gleichstrom regeln, der als Schleifenstrom auf der betreffenden Anschlußleitung fließt. In solchen Kommunikationssystemen werden für die Durchschaltung der einzelnen Verbindungen in der Koppeleinrichtung elektronische Koppelpunkte verwendet und es findet zwischen der Leitungsseite und der Koppeleinrichtungsseite eine Entkopplung durch Übertrager statt. Dies ist notwendig, da von den genannten Koppelpunkten nur kleine Signalamplituden innerhalb des Arbeitsbereiches dieser Koppeleinrichtungsbausteine durchgeschaltet werden können. Vermittels des Übertragers gelangen deshalb lediglich die Sprechwechselspannungen auf die Koppeleinrichtung. Es wird der jeweilige Übertrager gleichstrommäßig von der Leitung entkoppelt und gleichzeitig durch eine sogenannte Halteschaltung sichergestellt, daß der Schleifenstrom fließen kann. Wegen der galvanischen Trennung der Teilnehmerseite, zumindest von der externen Leitungsseite, kann in den Fallen, in denen Fernsprechendgeräte mit automatischem Dämpfungsausgleich an ein solches Kommunikationssystem angeschlossen werden, eine ordnungsgemäße Betriebsweise dieses Fernsprechendgerätes nicht erfolgen. Es kann nämlich eine voraussetzungsgemäß vorgesehene Regelung nicht durchgeführt werden.

Es ist die Aufgabe der Erfindung, entsprechende Maßnahmen vorzusehen, damit auch bei einem Kommunikationssystem mit elektronischer Koppeleinrichtung der Anschluß von Fernsprechendgeräten mit automatischem Dämpfungsausgleich ermöglicht wird.

Dies wird ausgehend vom Oberbegriff des Patentanspruches 1 durch dessen kennzeichnende Merkmale gelost.

Das wesentliche der Erfindung besteht darin, daß die Struktur der Koppeleinrichtung um zusätzliche Innenverbindungswege und um Wege für externe Verbindungen, d.h. auch Amtskoppelwege, für die jeweils eine zusätzliche Bedämpfung vorgesehen ist, erweitert ist. Diese zusätzlichen Wege werden durch die Steuerung automatisch immer dann in Anspruch genommen, wenn in die gewünschte Verbindung ein Fernsprechendgerät mit automatischem Dämpfungsausgleich einbezogen ist. Dabei erfolgt nicht nur eine portindividuelle Anpassung der Dämpfung, sondern der Dämpfungswert ist unterschiedlich, je nachdem, ob für ein solches Endgerät eine interne Verbindung mit einem gleichartigen Endgerät oder mit einem systemorientierten Endgerät bzw. ob eine Verbindung über einen externen Verbindungsweg besteht. Durch diese zusätzliche Bedämpfung sind dann diese Fernsprechendgeräte mit automatischem Dämpfungsausgleich auch problemlos anzuschließen, wenn für das private Kommunikationssystem der Spannungswert der eingesetzten Versorgungsspannung wesentlich geringer ist als bei den öffentlichen Systemen, in denen derartige Geräte normalerweise eingesetzt sind. Es besteht Konfigurationsfreiheit bezüglich des Typs der Fernsprechendgeräte. Es wird - bezogen auf die Sprachinformation - die Lautstärke bei reduziertem Leitungsstrom der Anschlußleitung auf den bei einem normalen Betrieb dieser Endgeräte auftretenden Wert gebracht.

Die Notwendigkeit der Zuordnung eines mit zusätzlicher Bedämpfung versehenen Durchschalteweges ist jedoch auch durch den Betreiber des Kommunikationssystems bzw. durch den betreffenden Teilnehmer frei bestimmbar. Dies kann erfindungsgemäß durch eine vorgegebene Prozedur als betriebstechnische Eingabe der Systemsteuerung übermittelt und entsprechend abgespeichert werden. Eine solche Prozedur kann erfindungsgemäß in der Eingabe einer vorgegebenen Codenummer bestehen, die nach Abgabe einer entsprechenden Dienstekennung gewählt wird. Damit wird bis zu einem eventuellen Austausch des Endgerätes festgelegt, daß bei allen zukünftigen Gesprächsverbindungen, an denen dieses Endgerät beteiligt ist, eine zusätzliche Bedämpfung vorgenommen wird.

Grundsätzlich erfolgt die Anpassung der elektronischen Koppeleinrichtung an die Fernsprechendgeräte mit automatischem Dämpfungsausgleich kostenminimiert. Die zusätzliche Bedämpfung besteht in einfacher Weise in der wirksamen Anschaltung eines aus ohmschen Widerständen gebildeten T-förmigen Bedämpfungsgliedes. Das Problem wird also mit dieser einfachen Beschaltung gelöst.

Die Erfindung wird im folgenden anhand eines figürlich dargestellten Ausführungsbeispiels erläutert. In der FIG ist die Struktur eines digitalen privaten Kommunikationssystems schematisch dargestellt. Es sind lediglich die zum Verständnis der Erfindung notwendigen Komponenten gezeigt.

Zentraler Bestandteil des Kommunikationssystems KS, das z.B. ein kleines Nebenstellenkommunikationssystem darstellt, ist eine zentrale Koppeleinrichtung KF, über die Endgeräte, von denen die Endgeräte KE1...KEn schematisch angedeutet sind, miteinander bzw. mit mindestens einer Verbindungsleitung AL1...ALx verbindbar sind. Jede dieser Leitungen AL1...ALx führen zu einer Vermittlungsanlage ÖN des öffentlichen Netzes. Die zentrale Koppeleinrichtung KF steht unter dem Steuereinfluß einer zentralen Systemsteuerung AST, die neben dem Zentralprozessor CPU eine Speichereinrichtung SPE und eine Takteinheit TG enthält. Als Schnittstelleneinrichtungen zu den Endgeräten KE1...KEn sind in Abhängigkeit von der Art der angeschlossenen Endgeräte Anschaltebaugruppen LA1...LAn vorhanden. Jeder als Amtsleitung vorhandenen Leitung AL wird eine Anschaltebaugruppe LS zugeordnet. Durch diese Anschaltebaugruppen werden u.a. unterschiedliche Signalisierungsinformationen von den Endgeräten oder von dem öffentlichen System auf ein innerhalb des Kommunikationssystems KS einheitlich verwendetes Format umgewandelt. Zur Bestimmung von Leitungszuständen enthalten in nicht dargestellter Weise die Anschaltebaugruppen Indikationsstellen, die durch die Systemsteuerung gescannt werden. Weiterhin ist eine zentrale Signaleinrichtung SE vorhanden, die für die Erzeugung der Hörtöne und für die zur Rufsignalisierung notwendigen Rufwechselspannungen zuständig ist. Der Zentralprozessor CPU steuert sämtliche Vermittlungsvorgänge und besorgt eine Aufbereitung und Zuteilung der Steuerdaten. Diese Aufgaben können auch auf mehrere Prozessoren aufgeteilt werden.

Der Zentralprozessor CPU hat Zugriff zu den in der Speichereinrichtung SPE abgelegten Informationen. Sie besteht aus mehreren Speicherbereichen, wobei in dem Speicherbereich PROM u.a. die Systemdatenbasis und das Systembetriebsprogramm BS enthalten ist. Weiterhin sind darin die bezüglich der Peripherietechnik, der Betriebstechnik, der Sicherheitstechnik und der Vermittlungstechnik vorhandenen Programme abgespeichert. Dies ist bezüglich der Vermittlungstechnik durch das Modul VT angedeutet. Mit LM ist ein Modul bezeichnet, das symbolisch für die zur Realisierung der einzelnen Leistungsmerkmale vorhandenen Programmodule steht.

In dem Speicherbereich RAM ist als Teileinheit der Datenbasis der Speicherteil KD angedeutet. In diesem sind die benutzerindividuellen Daten und die Systemkonfigurationsdaten enthalten. In dem Speicherteil SYS sollen die systembezogenen Daten enthalten sein. Der Speicherteil RAM dient u.a. der Aufnahme von temporären Daten zur Programmablaufsteuerung. Es werden in ihm auch Daten übernommen, die während eines durch ein Kommunikationsendgerät initiierten Verbindungsaufbau oder bei der Inanspruchnahme eines Dienstes bzw. eines Leistungsmerkmals abgefragt werden. Für jedes Endgerät sind sämtliche endgerätebezogenen Daten abgelegt. Es ist also daraus für die Steuerung sowohl der aktuelle vermittlungstechnische Zustand - beispielsweise, ob der betreffende Teilnehmer den Handapparat abgehoben hat, ob er gerufen wird, usw. - als Speicherinformation entnehmbar.

Es wird vorausgesetzt, daß in der Koppeleinrichtung KF zur Durchschaltung der einzelnen Verbindungen elektronische Koppelpunkte, z.B. in Form von CMOS-Bausteinen, angewendet werden. In einem solchen Fall findet dann zwischen der Leitungsseite und der Koppeleinrichtungsseite eine Entkopplung durch Übertrager statt. Dies ist notwendig, da von den genannten elektronischen Koppelpunkten nur kleine Signalamplituden innerhalb des Arbeitsbereiches dieser Koppelfeldbausteine durchgeschaltet werden können. Über diesen Übertrager gelangen deshalb Lediglich die Sprechwechselspannungen auf die Koppeleinrichtung. Ein solcher Übertrager ist für die Anschaltebaugruppe, mit der die Anschaltung an eine weiterführende Leitung, beispielsweise die Amtsleitung AL1 erfolgt, gezeigt. Der jeweilige Übertrager Ue ist gleichstrommäßig durch den Kondensator C von der Leitung entkoppelt. Durch eine Halteschaltung H wird erreicht, daß der Schleifenstrom fließen kann und somit dieser amtsseitig als Indikator für die Impulswahl benutzbar ist und der jeweilige Schleifenzustand festgestellt werden kann. Diese nicht weiter dargestellte Halteschaltung wird üblicherweise als elektronische Anordnung realisiert, die die Funktionen einer konventionellen Haltedrossel erfüllt. In den Anschaltebaugruppen LA1...LAn, die für den Anschluß der Teilnehmerendgeräte KE1...KEn notwendig sind, ist zum Fernspeisen dieser Endgeräte eine nicht weiter gezeigte Speiseschaltung enthalten. In nicht dargestellter Weise ist mit der Anschlußleitung beispielsweise ebenfalls die Wicklung eines Eingangsübertragers verbunden und es ist üblicherweise eine Gleichspannungsquelle mit Hilfe einer Steuerlogik zur Realisierung der Speisung schaltbar. Aus unterschiedlichen Gründen, beispielsweise um die Verlustleistung zu reduzieren, ist der Spannungswert dieser Gleichspannungsquelle in der Regel wesentlich geringer als der Spannungswert der im öffentlichen Netz eingesetzten Gleichspannungsquelle. Sowohl diese Tatsache als auch die Anwendung der Übertrager an den leitungsseitigen Anschlüssen bringt Probleme in den Fällen, in denen Endgeräte mit automatischem Dämpfungsausgleich an das Kommunikationssystem angeschlossen werden. Derartige Endgeräte sind in erster Linie für den Anschluß an Vermittlungssysteme des öffentlichen Netzes vorgesehen. Für den Betreiber des Kommunikationssystems KS, das beispielsweise ein kleines Kommunikationssystem mit einer geringen Anzahl von anzuschließenden Endgeräten darstellt, soll es jedoch auch möglich sein, derartige Endgeräte mit automatischem Dämpfungsausgleich anzuschließen. Derartige Endgeräte sollen beispielsweise die Endgeräte KE2...KEn darstellen. Sie sind dementsprechend zusätzlich mit dem Bezugszeichen ADA gekennzeichnet. Ohne besondere Maßnahmen wäre die Gesprächslautstärke bei Fernsprechverbindungen, in denen solche 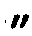 ADA"-Endgeräte beteiligt sind, unverhältnismäßig laut, so daß diese Tatsache im allgemeinen als besonders störend vom Teilnehmer empfunden wird. Neben den letztgenannten Endgeräten sind auch systemorientierte Endgeräte, die beispielsweise durch das Endgerät KE1 symbolisiert sind, anschließbar.

Zur Lösung des bestehenden Pegel-Problems werden nun für interne und für externe Verbindungen, an denen die sogenannten 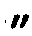 ADA"-Endgeräte beteiligt sind, durch eine entsprechende Anpassung der Struktur der Koppeleinrichtung KF zusätzliche Wege vorgegeben. In diesen Koppelwegen sind Dämpfungsglieder mit einem Dämpfungswert zusätzlich eingeschaltet, der auf die Verbindungsart und die Art der beteiligten Endgeräte abgestimmt ist. Bei einer Gesprächsverbindung zwischen 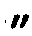 ADA"-Endgeräten oder zwischen einem 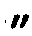 ADA"-Endgerät und einem Systemspezifischen bzw. Nicht- 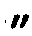 ADA"-Endgerät wird dann jeweils der geeignete Koppelweg durch die Systemsteuerung vermittelt. Hierzu ist bei der Installation der Anlage bzw. beim Austausch eines Endgerätes durch ein Endgerät einer anderen Art der Systemsteuerung die Information zu übermitteln, welcher Endgerätetyp an einem bestimmten Anschlußport angeschaltet ist. Diese Information kann durch eine vorgegebene Prozedur entweder vom jeweiligen Endgerät aus oder von dem mit einer zusätzlichen Funktionalität ausgestatteten, sogenannten Systemfernsprechendgerät, der Systemsteuerung übermittelt werden. Der Typ des jeweiligen Fernsprechendgerätes kann der Systemsteuerung beispielsweise durch eine nach der entsprechenden Dienstekennung eingewählte Codenummer als 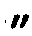 ADA"-Endgerät angemeldet werden. Für den betreffenden Teilnehmer wird die Tatsache, daß es sich um ein solches Endgerät mit automatischem Dämpfungsausgleich handelt, durch die überhöhte Lautstärke bewußt. Wählt er diejenige Codenummer ein, die im Endergebnis zu einer Reduzierung dieser Lautstärke führt, so wird bei jedem nachfolgenden Gespräch, das von diesem Endgerät aus aufgebaut wird, ein Koppelweg mit einer zusätzlichen Bedämpfung zur Verfügung gestellt.

Es wird eine von einem 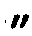 ADA"-Endgerät aus aufgebaute Gesprächsverbindung generell bedämpft. Als Dämpfungsglieder werden aus entsprechenden Widerständen gebildete T-Glieder verwendet. Bei einer Amtsverbindung, die beispielsweise vom 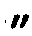 ADA"-Endgerät KE3 aufgebaut wurde, sind zur zusätzlichen Bedämpfung über die durchgeschalteten Koppelpunkte K1 und K2 die Widerstände R1 und R2 sowie der Widerstand R3 in den betreffenden Koppelweg wirksam eingeschaltet. Dieser Verbindungsweg ist in der FIG durch die gestrichelte Doppellinie dargestellt. Für eine zweite weiterführende Leitung, beispielsweise für die neben der ersten Amtsleitung AL1 vorhandene weitere Amtsleitung Alx, wird dann ein in gleicher Weise zusätzlich bedämpfter Koppelweg bereitgestellt.

Der Schleifenstrom auf der Teilnehmerseite wird kleingehalten, so daß die angeschlossenen 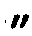 ADA"-Endgeräte ihre Verstärkung im Sinne einer 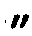 langen" Leitung aufregeln. Bei der internen Verbindung von zwei derartigen 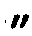 ADA"-Endgeräten, beispielsweise für die gestrichelt dargestellte Verbindung zwischen den Endgeräten KE4 und KEn, wird gleichfalls ein aus den Widerständen R4, R5 und R6 bestehendes T-Dämpfungsglied über die Koppelpunkte K5 und K6 hinzugeschaltet. Der damit vorgegebene Dämpfungswert ist höher als bei einer Verbindung zwischen einem 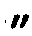 ADA"-Endgerät und einem systemspezifischen Endgerät, wie es beispielsweise das Endgerät KE1 darstellen soll. Bei einer internen Verbindung, z.B. zwischen dem Endgerät KE1 und dem 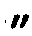 ADA"-Endgerät KE2, die durch eine strichpunktierte Linie dargestellt ist, werden über die Koppelpunkte K3 und K4 die Widerstände R7, R8 und der Widerstand R9 in Form eines T-Bedämpfungsgliedes hinzugeschaltet. Der damit erzielte Bedämpfungswert ist geringer als der Bedämpfungswert, der bei einer internen Verbindung zwischen zwei Endgeräten mit automatischem Dämpfungsausgleich, also beispielsweise bei der strichliert dargestellten internen Verbindung zwischen den Endgeräten KE4 und KEn vorgegeben ist. An den Anschlußpunkten M1...M3 liegt jeweils die für die elektronischen Koppelpunkte notwendige Offset-Spannung und diese Anschlußpunkte bilden gleichzeitig für die Sprachwechselspannungen das Masse-Bezugspotential.

Nachdem der Betreiber des Kommunikationssystems der Systemsteuerung gegenüber die Endgerätekonfiguration bekannt gemacht hat, wird also durch die Systemsteuerung bei jeder Verbindung, an der ein angeschlossenes Endgerät mit automatischem Dämpfungsausgleich beteiligt ist, eine zusätzliche Bedämpfungsmaßnahme aktiviert. Es kann also erfindungsgemäß eine Auswahl zwischen Koppelwegen mit unterschiedlichen Bedämpfungen erfolgen. Initiiert wird diese Möglichkeit durch die Konfigurierungsprozedur, bei der z.B. bei einem als zu laut empfundenen Endgerät durch die einmalige Nachwahl einer vorgegebenen Codenummer bei nachfolgenden Gesprächen diese zusätzliche Bedämpfung vorgenommen wird.

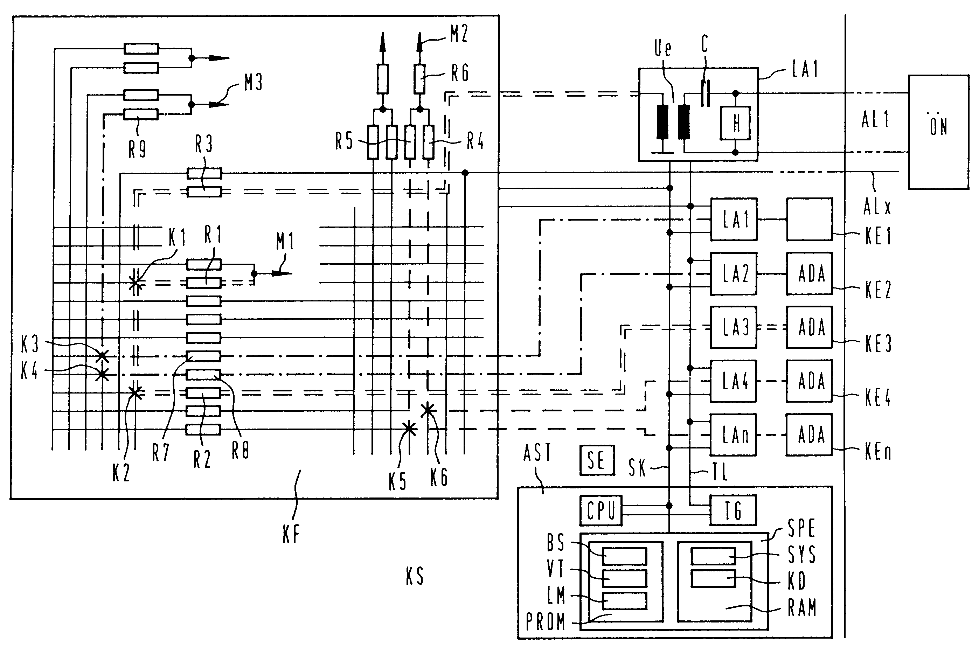

## Patentansprüche

1. Anordnung zur Verbesserung der Betriebsweise eines programmgesteuerten Kommunikationssystems zur Vermittlung von mehreren angeschlossenen Kommunikationsendgeräten bzw. mindestens einer externen Anschlußleitung über eine elektronische Koppelfeldeinrichtung (KF), insbesondere eines kleinen Kommunikationssystems, das eine die vermittlungstechnische und die betriebstechnische Steuerung und Koordinierung durchführende zentrale Systemsteuerung aufweist, die aus einem Systemspeicher (SPE), der neben einem die Systemdatenbasis und ein Betriebsprogramm enthaltenden Programmspeicher (PROM) einen unter anderem anschlußportbezogene und über eine betriebstechnische Eingabe zu übermittelnde Informationen aufnehmenden Datenspeicher (KD im RAM) und aus einem Systemprozessor (CPU) besteht, wobei neben systemorientierten Fernsprechendgeräten (KE1) auch Fernsprechendgeräte (KE2...KEn) mit automatischen Dämpfungsausgleich angeschlossen sind,
**dadurch gekennzeichnet,**
daß in der Koppeleinrichtung (KF) Durchschaltewege für interne Verbindungen und für mindestens einen über einen entsprechenden Leitungssatz (LS1) verlaufenden externen Verbindungsweg (AL1) vorgesehen sind, für die selektiv eine zusätzliche Bedämpfung (z.B. R4...R6; R7...R9; R1...R3) vorgegeben ist, daß im Datenspeicher (KD) als anschlußportbezogene Information die Art des jeweils angeschlossenen Endgerätes einspeicherbar ist, daß in den Fällen in denen die Verbindungsaufbauprozedur von einem Endgerät mit automatischem Dämpfungsausgleich (KE2-ADA...KEn-ADA) eingeleitet bzw. eine ankommende externe Verbindungsanforderung für ein solches Endgerät registriert wird, der geeignete Durchschalteweg mit zusätzlicher Bedämpfung (R1, R2, R3) durch die das jeweilige Endgerät (KE3) seiner Art nach identifizierende Systemsteuerung (AST) zur Verfügung gestellt wird.

2. Anordnung nach Anspruch 1,
**dadurch gekennzeichnet,**
daß bei einer aufzubauenden Verbindung zwischen Fernsprechendgeräten mit automatischem Dämpfungsausgleich (KE4, KEn) bzw. zwischen Fernsprechendgeräten mit automatischem Dämpfungsausgleich (KE2) und einem angeschlossenen systemorientierten Fernsprechendgerät (KE1) oder zwischen einem Fernsprechendgerät (KE3) mit automatischem Dämpfungsausgleich und einem für eine externe Verbindung heranzuziehenden Leitungssatz (LS1) jeweils eine zusätzliche Bedämpfung (R4...R6; R7...R9; R1...R3) mit unterschiedlichem Bedämpfungswert vorgesehen ist.

3. Verfahren nach Anspruch 1 oder 2,
**dadurch gekennzeichnet,**
daß die Notwendigkeit der Zuordnung eines mit der zusätzlichen Bedämpfung versehenen Durchschalteweges durch den Betreiber des Kommunikationssystems bzw. durch einen Teilnehmer frei bestimmbar ist.

4. Anordnung nach Anspruch 3,
**dadurch gekennzeichnet,**
daß die Bestimmung desjenigen Fernsprechendgerätes (KE2..KEn) mit automatischem Dämpfungsausgleich (ADA), dem für eine Gesprächsverbindung eine zusätzliche Bedämpfung zuzuordnen ist, durch eine vorgegebene Prozedur als betriebstechnische Eingabe der Systemsysteuerung übermittelt und im anschlußportbezogenen Datenspeicher (KD) abgespeichert wird.

5. Anordnung nach Anspruch 4,
**dadurch gekennzeichnet,**
daß die Prozedur in der Eingabe einer Dienstekennung und der Einwahl einer vorgegebenen Codenummer besteht.

6. Anordnung nach Anspruch 2,
**dadurch gekennzeichnet,**
daß die zusätzliche Bedämpfung jeweils in der wirksamen Anschaltung eines aus ohmschen Widerständen (R1...R3; R4...R6; R7...R9) gebildeten T-förmigen Bedämpfungsgliedes besteht.

7. Anordnung nach einem der vorhergehenden Ansprüche,
**dadurch gekennzeichnet,**
daß die für Speisung der Kommunikationsendgeräte vorgesehene Gleichspannungsquelle einen gegenüber der im öffentlichen Netz vorgesehenen Speisung wesentlich geringeren Spannungswert aufweist.
